# EUROPÄISCHE PATENTANMELDUNG

(11) **EP 2 348 059 A1**
(43) Veröffentlichungstag der Anmeldung: **27.07.2011**
(21) Anmeldenummer: 10000563.6
(22) Anmeldetag: 21.01.2010
(51) Int. Cl.: C08G 18/08, C08G 18/12, C08G 18/66, C09D 175/04

(54) **Verfahren zur Herstellung von wässrigen Dispersionen basierend auf Polyurethanharnstoffen**

(71) Anmelder: Bayer MaterialScience AG, 51368 Leverkusen (DE)
(72) Erfinder: Peerlings, Henricus Dr., 42699 Solingen (DE); Gertzmann, Rolf Dr., 51377 Leverkusen (DE)

(57) **Zusammenfassung**

Die vorliegende Erfindung betrifft Verfahren zu Herstellung von wässrigen Dispersionen basierend auf Polyurethanharnstoffen und die Verwendung dieser Dispersionen in Beschichtungsmitteln.

## Beschreibung

Die vorliegende Erfindung betrifft Verfahren zu Herstellung von wässrigen Dispersionen basierend auf Polyurethanharnstoffien und die Verwendung dieser Dispersionen in Beschichtungsmitteln.

Die DE-A 19 653 585 beschreibt Polyharnstoffdispersionen die nach der physikalischen Trocknung bei 20 bis 100°C transparente hochglänzende, UV-beständige, temperaturbeständige (-30 bis 80°C), gegen Niederschläge (organischer oder anorganischer Natur) resistente Lacke, die einerseits gut haften und andererseits durch Abziehen leicht entfernt werden können. Die Reißfestigkeit und Dehnung der Lackschichten sind angemessen hoch wie z.B. beschrieben in DE-A 19 653 585. Die Verfilmungseigenschaften der Produkte sind allerdings unzureichend und müssen z.T durch Zusatz von Lösemitteln eingestellt werden

In DE-A 10311420 werden Polyether-basierte Abziehlacke beschrieben, welche allerdings nicht die erforderliche Lichtstabilität aufweisen.

EP-B 1072652 und EP-A 1132413 beschreiben aufwendige Verfahren zur Herstellung von Polyurethandispersionen, wobei eine Mischung aus zwei Polyurethandispersionen mit unterschiedlicher Glasübergangstemperatur oder eine zusätzliche Pfropfung Acrylatmonomere auf die Polyurethandispersion durchgeführt wird.

In den Anmeldungen EP-A 1338634 und DE-A 10311420 wird die Verwendung von Monoaminen erwähnt, jedoch wird weder das Verfahren zum Einbringen dieser Komponente in die Dispersion beschrieben, noch der daraus resultierende Effekt. Eine optimale Verfilmung der Beschichtungen ohne Lösemittel ist unterhalb von Raumtemperatur nicht möglich.

Es besteht nun von den Anwendern derartiger Lacke der Wunsch nach Beschichtungsmitteln, die nach ihrer Verwendung in Lacken neben der üblichen vorteilhaften Eigenschaften wie beispielsweise Lichtstabilität und Säurebeständigkeit eine bessere Wasserfestigkeit und Abziehbarkeit zeigen.

Eine Aufgabe der vorliegenden Erfindung war es daher, Verfahren zur Herstellung neuer wässriger anionischer Polyurethan-Dispersionen zur Verfügung zu stellen, die bei ihrer Verwendung Lacke und Beschichtungen ergeben, die eine verbesserte Abziehfähigkeit und Wasserfestigkeit zeigen.

Ebenfalls eine Aufgabe der vorliegenden Erfindung war es daher, Verfahren zur Herstellung neuer wässriger anionischer Polyurethan-Dispersionen zur Verfügung zu stellen, die bei ihrer Verwendung Lacke und Beschichtungen ergeben, die eine verbesserte Abziehfähigkeit und Wasserfestigkeit zeigen, ohne dass andere vorteilhafte Eigenschaften wie hohe Lichtechtheit, hohe Transparenz, hohe Temperaturbeständigkeit und hohe Resistenz gegen Niederschläge (organischer und anorganischer Natur) beeinträchtigt werden.

Es wurde nun überraschenderweise gefunden, daß man die gewünschten anwendungstechnischen Eigenschaften erhält, wenn bei der Herstellung der Polyurethandispersionen die Zugabe von Diaminen und monofunktionellen Aminen nacheinander erfolgt.

Geeignete Dispersionen für lichtechte Beschichtungsmittel basieren auf colöser-armen bzw. colöser-freien wässrigen, anionischen Dispersionen von Polyurethanpolyharnstoffen, deren Festkörper das zumindest teilweise in der Salzform vorliegende Umsetzungsprodukt enthält aus
a) wenigstens ein NCO-Prepolymer umfassend
i) 20 bis 60 Gew.-% wenigstens eines Diisocyanates,
ii) 20 bis 80 Gew.-% wenigstens eines Makrodioles mit einem zahlenmittleren Molekulargewicht von 500 bis 10 000,
iii) 2 bis 12 Gew.-% wenigstens einer 2,2-Bis-(hydroxymethyl)-alkan-monocarbonsäure,
iv) 0 bis 15 Gew.-% wenigstens eines kurzkettigen Diols mit einem zahlenmittleren Molekulargewicht von 62 bis 499 und
v) 0 bis 10 Gew.-% wenigstens eines monofunktionellen Alkohols mit einem zahlenmittleren Molekulargewicht von 32 bis 3500;
b) 0,1 bis 15 Gew.-% wenigstens eines Diamins mit einem zahlenmittleren Molekulargewicht von 60 bis 300,
c) 0,1 bis 5 Gew.-% wenigstens eines monofunktionellen Amins und
d) 0,1 bis 10 Gew.% wenigstens eines Neutralisationsmittels,
wobei sich die Mengen der Komponenten a), b), c) und d) zu 100 % ergänzen, dadurch gekennzeichnet, dass die Zugabe der gesamten Menge der Komponente c) und die Zugabe der gesamten Menge der Komponente b) nacheinander erfolgt.
Im Sinne der vorliegenden Erfindung bedeutet, dass die Zugabe der gesamten Menge der Komponente c) und die Zugabe der gesamten Menge der Komponente b) nacheinander erfolgt, dass entweder zuerst die Zugabe der gesamten Menge der Komponente c) und anschließend die Zugabe der gesamten Menge der Komponente b) erfolgt oder dass zuerst die Zugabe der gesamten Menge der Komponente b) und anschließend die Zugabe der gesamten Menge der Komponente c) erfolgt.

Bevorzugt erfolgt die Zugabe der gesamten Menge der Komponente c) und die Zugabe der gesamten Menge der Komponente b) in einem zeitlichen Abstand von 0 bis 10 Stunden, besonders bevorzugt 0 bis 3 Stunden, ganz besonders bevorzugt 0 bis 1 Stunde, nacheinander.

Vorzugsweise wird in der Prepolymerstufe a) ein NCO-Gehalt von 65 bis 85 %, besonders bevorzugt von 70 % bis 80 %, des berechneten NCO-Gehalts eingestellt.

Vorzugsweise liegt die Säurezahl des Prepolymers im Bereich von 5 bis 35 mg KOH/g, besonderes bevorzugt im Bereich von 8 bis 25 mg KOH/g.

Die erfindungsgemäß hergestellten Polyurethan-Dispersionen sind Colöser-arm. Die erfindungsgemäß hergestellten Polyurethan-Dispersionen enthalten bevorzugt 0,0 bis 0,9 Gew.-%, besonders bevorzugt 0,0 bis 0,5 Gew.-%, ganz besonders bevorzugt 0,0 bis 0,4 Gew.-% an Colösern, bezogen auf die Gesamtmenge der Polyurethan-Dispersion.

Die erfindungsgemäß hergestellten Beschichtungsmittel sind Colöser-arm. Die erfindungsgemäß hergestellten Beschichtungsmittel enthalten bevorzugt 0,0 bis 0,9 Gew.-%, besonders bevorzugt 0,0 bis 0,5 Gew.-%, ganz besonders bevorzugt 0,0 bis 0,4 Gew.-% an Colösern, bezogen auf die Gesamtmenge des Beschichtungsmittels.

Colöser im Sinne der vorliegenden Erfindung sind polare organische Lösemittel. Vorzugsweise sind Colöser organische Lösemittel mit einem Hansen-Parameter im Bereich von 7.2 bis 16.0 (cal/cm³)^{o},⁵, wie sie in "Polymer Handbooks", Eds. Brandrup, J.; Immergut, E.H.; Grulke, E.A., 4th Edition, John Wiley, New York, 1999, VII/Seite 675-711 veröffentlicht sind.

Bevorzugte Colöser im Sinne der vorliegenden Erfindung sind polare organische Lösemittel ausgewählt aus der Gruppe bestehend aus Aceton, Methylethylketon, Butyldiglykol, Dimethylsulfoxid, N-Ethylpyrrolidon, Dimethylformamid, Dimethylacetamid, N-Methylpyrrolidon, Butylenglykol und Dipropylenglykol-dimethylether.

Als Komponente a)i) werden bevorzugt aliphatische und/oder cycloaliphatische Diisocyanate verwendet, wie beispielsweise Diisocyanate ausgewählt aus der Gruppe bestehend aus Isophorondiisocyanat (IPDI), 4,4'-Dicyclohexyl-methandiisocyanat, 1-Methyl-2,4-diisocyanato-cyclohexan, 1-Methyl-2,6-diiso-cyanato-cyclohexan, 1,6-Hexamethylen-diisocyanat und 1,3-Cyclohexan-düsocyanat. Bevorzugt wird die Komponente a)i) in einer Menge von 20 bis 60 Gew.-%, besonders bevorzugt in einer Menge von 20 bis 50 Gew.-%, bezogen auf die Summe aller Komponenten a), b), c) und d), verwendet.

Die Mitverwendung von geringen Anteilen an aromatischen Diisocyanaten wie beispielsweise 2,4- und 2,6-Toluoldiisocyanat oder 2,4'- und 4,4'-Diphenylmethandiisocyanat ist ebenfalls möglich. Die aromatischen Diisocyanate werden bevorzugt in einer Menge von 0 bis 10 Gew.-% bezogen auf die Gesamtmenge der Komponente a)i) verwendet.

Als Komponente a)ii) werden Makrodiole mit einem Molekulargewicht von 500 bis 10 000 eingesetzt. Hierbei handelt es sich bevorzugt um Polyesterdiole, die durch Umsetzung von Dicarbonsäuren bzw. deren Anhydriden mit Diolen gegebenenfalls unter Zuhilfenahme üblicher Veresterungskatalysatoren vorzugsweise nach dem Prinzip einer Schmelz- oder Azeotropkondensation bei Temperaturen von 140 - 240°C erhalten werden. Bevorzugt wird die Komponente a)ii) in einer Menge von 20 bis 80 Gew.-%, besonders bevorzugt in einer Menge von 30 bis 70 Gew.-%, bezogen auf die Summe aller Komponenten a), b), c) und d), verwendet.

Beispiele geeigneter Dicarbonsäuren bzw. deren Anhydriden sind Adipinsäure, Bernsteinsäure(anhydrid), Maleinsäure(anhydrid), Sebacinsäure, Azelainsäuren, Dimerfettsäuren (in hydrierter und nicht-hydrierter Form), Phthalsäure(anhydrid), Isophthalsäure, Tetrahydrophthalsäure(anhydrid), 1,4-Cyclohexandicarbonsäure, Hexahydrophthalsäure(anhydrid). Als Diole kommen die technisch verfügbaren Diole zum Einsatz, wie z.B. Ethylenglykol, 1,2- und 1,3-Propandiol, 1,3- und 1,4-Butandiol, 1,6-Hexandiol, Diethylenglykol, Dipropylenglykol, Neopentylglykol oder Mischungen derartiger Diole. Bevorzugt als Komponente a)ii) sind Polyesterdiole aus Adipinsäure, Hexandiol und Neopentylglykol.

Ebenfalls geeignet als Komponente a)ii) sind Polycarbonatdiole, Polycaprolactondiole, Hydroxypolytetrahydrofurane oder Hydroxypolyether auf Basis von Propylenoxid.

Geeignete Polycarbonatdiole werden z.B. erhalten, indem Kohlensäurederivate, wie z.B. Diphenylcarbonat oder Phosgen mit Alkoholen, vorzugsweise Diolen der genannten Art, umgesetzt werden.

Die mittlere Molmasse der Polyole der Komponente a)ii) liegt zwischen 500 und 10 000, bevorzugt zwischen 700 und 4000, besonders bevorzugt sind Makrodiole mit Molmassen zwischen 1000 und 2500 g/mol.

Bei den Ausgangskomponenten a)iii) handelt es sich bevorzugt um 2,2-Bis-(hydroxymethyl)-alkanmonocarbonsäuren mit insgesamt 5 - 8 Kohlenstoffatomen, d.h. Verbindungen der allgemeinen Formel (I), 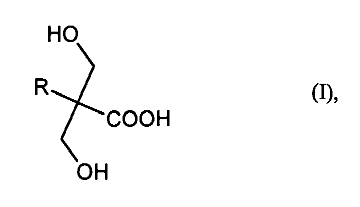 in welcher
R für einen Alkylrest mit 1 - 4 Kohlenstoffatomen steht.

Bevorzugt steht R für einen unsubstituierten Alkylrest mit 1 - 4 Kohlenstoffatomen.

Ganz besonders bevorzugt ist die Komponente a)iii) 2,2-Dimethylolpropionsäure.

Bevorzugt wird die Komponente a)iii) in einer Menge von 2 bis 12 Gew.-%, besonders bevorzugt in einer Menge von 2 bis 8 Gew.-%, bezogen auf die Summe aller Komponenten a), b), c) und d), verwendet.

Als Ausgangskomponente a)iv) kommen kurzkettigen Diole mit einem Molekulargewicht im Bereich von 62 - 499 in Betracht. Besonders bevorzugt als Komponente a)iv) sind Verbindungen ausgewählt aus der Gruppe bestehend aus 1,4-Butandiol, 1,4 Cyclohexandimethanol und 1,6-Hexandiol. Bevorzugt wird die Komponente a)iv) in einer Menge von 0 bis 15 Gew.%, besonders bevorzugt in einer Menge von 0 bis 10 Gew.-%, bezogen auf die Summe aller Komponenten a), b), c) und d), verwendet.

Als Ausgangskomponente a)v) kommen Alkohole mit einem Molekulargewicht im Bereich von 32 bis 3500 in Betracht. Vorzugsweise werden Alkohole ausgewählt aus der Gruppe bestehend aus Methanol, Ethanol, Butanol, Hexanol, 2-Ethylhexanol, Oktanol und Dodecanol verwendet. Ebenfalls bevorzugt wird monofunktionelles Polyethylenglykol verwendet. Bevorzugt wird die Komponente a)v) in einer Menge von 0 bis 15 Gew.%, besonders bevorzugt in einer Menge von 0 bis 10 Gew.-%, bezogen auf die Summe aller Komponenten a), b), c) und d), verwendet.

Als Komponente b) können alle aliphatischen und/oder cycloaliphatischen Verbindungen verwendet werden, die mindestens zwei gegenüber Isocyanaten reaktive Aminogruppen tragen und eine Molekulargewicht im Bereich von 60 bis 300 aufweisen. Besonders bevorzugt wird die Komponente b) ausgewählt aus der Gruppe bestehend aus Ethylendiamin, Propylendiamin, Butylendiamin, Hexamethylendiamin, Isophorondiamin, Piperazin, p-Xylylendiamin, 4,4'-Diamino-dicyclohexylmethan und 4,4'-Diamino-3,3'-dimethyldicyclohexylmethan. Ganz besonders bevorzugt wird die Komponente b) ausgewählt aus der Gruppe bestehend aus Ethylendiamin, Isophorondiamin und 4,4'-Diamino-dicyclohexylmethan. Bevorzugt wird die Komponente b) in einer Menge von 0,1 bis 15 Gew.%, besonders bevorzugt in einer Menge von 0,5 bis 10 Gew.%, ganz besonders bevorzugt in einer Menge von 0,5 bis 5 Gew.-%, bezogen auf die Summe aller Komponenten a), b), c) und d), verwendet.

Als Komponente c) kommen monofunktionelle Amine, wie primäre Amine ausgewählt aus der Gruppe bestehend aus Methylamin, Ethylamin, n-Propylamin, n-Butylamin, n-Octylamin, Laurylamin, Stearylamin, Isopropylamin und Cyclohexylamin, sowie sekundäre Amine ausgewählt aus der Gruppe bestehend aus Dimethylamin, Diethylamin, Diisopropylamin, Dibutylamin und Piperidin in Betracht. Besonders bevorzugt werden sekundäre Amine wie Dibutylamin eingesetzt. Selbstverständlich können aus Mischungen aus diesen zum Einsatz kommen. Bevorzugt wird die Komponente c) in einer Menge von 0,1 1 bis 5 Gew.-%, besonders bevorzugt in einer Menge von 0,2 bis 3 Gew.-%, bezogen auf die Summe aller Komponenten a), b), c) und d), verwendet.

Als Neutralisationsmittel d) sind zum Beispiel Ammoniak, N-Methylmorpholin, Dimethylisopropanolamin, Triethylamin, Dimethylethanolamin, Methyldiethanolamin, Triethanolamin, Morpholin, Tripropylamin, Ethanolamin, Diethanolamin, Triisopropanolamin, N-Ethyl-diisopropylamin und Gemische daraus geeignet. Bevorzugt wird die Komponente d) in einer Menge von 0,1 bis 10 Gew.-% bezogen auf die Summe aller Komponenten a), b), c) und d), verwendet.

In einer bevorzugten Ausführungsform werden die Komponenten a)i), ii) und iii) in einem Reaktor vorgelegt und unter wasserfreien Bedingungen in einem Temperaturbereich von 50 - 150°C, bevorzugt 50 - 110°C, für eine Dauer von 5 min bis 10 h, bevorzugt für eine Dauer von 30 min bis 2 h, umgesetzt, danach wird abgekühlt und dem Ansatz technisch übliches Aceton sowie ggf. das kurzkettige Diol (iv) zugegeben und solange erhitzt, bis der NCO-Gehalt der Mischung auf einen Wert von 65 bis 85 % des berechneten NCO-Gehalts gefallen ist. Auf diese Weise entsteht das NCO-Prepolymer. Danach wird der Ansatz mit weiterem Aceton verdünnt und nacheinander mit den berechneten Menge der Komponenten b) und c) versetzt, wobei die jeweils zuerst zugegebene Komponente in Wasser gelöst wird. Es wird anschließend für eine Dauer von 10 min bis 10 h, bevorzugt von 30 min bis 2 h, bei einer Temperatur im Bereich von 30 °C bis 80 °C, bevorzugt im Bereich von 40 °C bis 80 °C, gerührt. Anschließend erfolgt Umsetzung mit der Komponente e), Dispersion in Wasser und Entfernen von Aceton bei vermindertem Druck.

Die Polymeraufbaureaktion, d.h. die Herstellung des Präpolymers a), wird bevorzugt ohne die Verwendung von Katalysatoren durchgeführt, es ist aber auch möglich, die in der Isocyanatchemie bekannten Katalysatoren einzusetzen (z.B. tert.-Amine wie Triethylamin, Zinnverbindungen wie Zinn-II-octoat, Dibutylzinndilaurat u. a. gebräuchliche Katalysatoren).

Wenn kein NCO mehr nachweisbar ist, beispielsweise nach entsprechender Kontrolle mittels IR, wird dem Ansatz die berechnete Menge Neutralisationsmittel, bevorzugt Ammoniaklösung, zugegeben, so dass 50 - 100 % der vorliegenden Carboxylgruppen durch das Neutralisationsmittel bzw. Ammoniak neutralisiert werden.

Durch Zugabe von Wasser und anschließendem Entfernen des eingesetzten Acetons durch Destillation wird die gewünschte Festkörperkonzentration eingestellt. Polyurethanpolyharnstoffdispersionen, die nach dem erfindungsgemäßen Verfahren gewonnen werden, weisen bevorzugt einen Gehalt an Feststoff im Bereich von 20 - 60 Gew.-%, besonders bevorzugt im Bereich von 30 - 40 Gew.-%, in Wasser auf.

Die erfindungsgemäß hergestellte Polyurethandispersion weist Teilchen mit einem mittleren Teilchendurchmesser bevorzugt im Bereich von 20 - 1.000 nm, besonders bevorzugt im Bereich von 50 - 500 nm auf, gemessen mit der Methode der dynamischen Lichtstreuung nach ISO 13320-1.

Die pH-Werte der weißen, erfindungsgemäß hergestellten, lagerstabilen Polyurethanpolyharnstoffdispersionen liegen im Bereich von 6 - 9.

Die erfindungsgemäß hergestellte Dispersion kann mit anderen anionischen oder nicht ionischen Dispersionen verschnitten werden, wie z.B. mit Polyvinylacetat, Polyethylen-, Polystyrol-, Polybutadien-, Polyvinylchlorid-, Polyacrylat- und Copolymerisat-Kunststoffdispersionen.

Eine gegebenenfalls gewünschte pH-Anpassung der Mischungen kann mit organischen oder anorganischen Basen erfolgen, wie z.B. Ammoniak, Alkalicarbonate, Amine, Aminoalkohole, wobei organische Basen bevorzugt sind. Ganz besonders bevorzugt ist 2-Amino-2-methyl-1-propanol.

Ein weiterer Gegenstand der Erfindung ist auch die Verwendung der erfindungsgemäß hergestellten Polyurethanpolyharnstoffe in Beschichtungsmitteln, um hochglänzende, lichtechte, wetterfeste, lösemittelfreie Lacke und Überzüge herzustellen. Diese Lacke und Überzüge dienen zum Schutz von Kraftfahrzeugen, Stahl-, Aluminium- und Metallgegenständen jeglicher Art, Glas- und Kunststoffgegenständen jeglicher Art, mineralischen Untergründen, Mauerwerk oder Natursteinen, zum Korrosionsschutz von Schiffen, Brücken, Flugzeugen, Eisenbahnen, zum Schutz von Holz- und Naturstoffgegenständen und beliebigen anderen Substraten. Die Beschichtungsmittel werden durch Tauchen, Rakeln, Gießen, Sprühen, Pinseln oder Spritzen aufgetragen und anschließend bei 120 bis 150°C getrocknet.

Gegenstand der Erfindung ist auch die Verwendung der erfindungsgemäß hergestellten Polyurethanpolyharnstoffe in Beschichtungsmitteln zur Herstellung von recyclisierbare Abziehlacken. Diese Abziehlacke dienen zum temporären Schutz von Kraftfahrzeugen, Eisenbahnen, Schiffen, Möbeln, Metallgegenständen, mineralischen Gegenständen, Glas- und Kunststoffgegenständen und beliebigen anderen Substraten. Die Beschichtungsmittel werden dazu durch Tauchen, Rakeln, Gießen, Sprühen, Spritzen oder Pinseln aufgetragen und anschließend bei 20 bis 100°C, bevorzugt bei 20 bis 80°C, durch Wärme oder Infrarotlicht, Mikrowellenbestrahlung oder Beschallung, getrocknet.

Die erfindungsgemäßen Überzüge sind wasserfeste, transparente, reißfeste, UV-beständige, temperaturbeständige, gegen Niederschläge (organischer oder anorganischer Natur) beständige, gegebenenfalls pigmentierte Beschichtungen, die einerseits auf den Substraten haften und andererseits durch Abziehen leicht entfernt werden können.

Bei der Formulierung der Lacke können die in der Lackchemie üblichen Hilfsmittel, wie z.B. Pigmente, Lichtstabilisatoren, Antiabsetzmittel, Verdicker, oberflächenaktive Verbindungen, Entschäumer etc. eingesetzt werden.

Die Applikation der Lacke erfolgt nach den üblichen Methoden der Lacktechnologie durch Tauchen, Rakeln, Gießen, Sprühen, Spritzen, Pinseln oder Walzen. Sie dienen als Abziehlack zum temporären Schutz von Kraftfahrzeugen, Stahl- und Aluminium-profilen, Glas- und Kunststoffscheiben bzw. Artikeln. Nach Applikation werden die lackierten Teile bei Raumtemperatur oder bei erhöhter Temperatur bis zu 100°C getrocknet.

Die erfindungsgemäß hergestellten Polyurethanharnstoffdispersionen werden bis zu 30 Minuten bei 140-150°C getrocknet, so dass auf den Substraten gut haftende Überzüge entstehen. Trocknungstemperaturen über 150°C sind selbstverständlich auch möglich, aber die Anwendung derart hoher Temperaturen ist im Allgemeinen unwirtschaftlich.

### Beispiele

### Beispiele 1:

In einem Reaktionsgefäß werden 170 g (0,1 mol) eines Polyesters aus Adipinsäure, 1,6-Hexandiol und Neopentylglykol mit einem durchschnittlichen Molekulargewicht von 1.700 g/mol und 2 % OH 30 Minuten bei 120°C und 10 mbar unter Rühren entwässert. Unter Stickstoff trägt man 13,4 g (0,1 mol) Dimethylolpropionsäure und 111 g (0,5 mol) Isophorondiisocyanat ein. Nach 1 Stunde Reaktionszeit bei 110°C wird der Ansatz auf 60°C abgekühlt und in 100 g Aceton gelöst. Nach Zugabe von 18 g (0,2 mol) 1,4-Butandiol wird 22 Stunden bei 50°C nachgerührt. Der NCO-Gehalt beträgt 1,60 % (berechnet 2,04 %). Man verdünnt mit 500 g Aceton. Zum NCO-Prepolymer wird bei 50°C eine Mischung aus 10,6 g (0,062 mol) Isophorondiamin, 1,07 g (0,016 mol) 25 %-ige Ammoniaklösung und 60 g Wasser gegeben. Anschließend rührt man 5 Stunden bei 50°C nach. Es wird mit 3,4 g (0,05 mol) 25 %-iger Ammoniaklösung neutralisiert und mit 450 g Wasser dispergiert. Das Aceton entfernt man bis 50°C und 150 mbar und erhält so eine weiße Dispersion mit einem Feststoffgehalt von 39,2 % und einer mittleren Teilchengröße von 263 nm.
Der Neutralisationsgrad beträgt 50 %.

### Beispiel 2:

In einem Reaktionsgefäß werden 170 g (0,1 mol) eines Polyesters aus Adipinsäure, 1,6-Hexandiol und Neopentylglykol mit einem durchschnittlichen Molekulargewicht von 1.700 g/mol und 2 % OH 30 Minuten bei 120°C und 10 mbar unter Rühren entwässert. Unter Stickstoff trägt man 13,4 g (0,1 mol) Dimethylolpropionsäure und 111 g (0,5 mol) Isophorondiisocyanat ein. Nach 1 Stunde Reaktionszeit bei 110°C wird der Ansatz auf 60°C abgekühlt und in 100 g Aceton gelöst. Nach Zugabe von 18 g (0,2 mol) 1,4-Butandiol wird 22 Stunden bei 50°C nachgerührt. Der NCO-Gehalt beträgt 1,60 % (berechnet 2,04 %). Man verdünnt mit 500 g Aceton. Zum NCO-Prepolymer wird bei 50°C zuerst 10,6 g (0,062 mol) Isophorondiamin in 60 g Wasser und danach 2,1 g (0,016 mol) Dibutylamin gegeben. Anschließend rührt man 5 Stunden bei 50°C nach. Es wird mit 7,2 g (0,063 mol) 15 %-iger Ammoniaklösung neutralisiert und mit 450 g Wasser dispergiert. Das Aceton entfernt man bis 50°C und 150 mbar und erhält so eine weiße Dispersion mit einem Feststoffgehalt von 39 % und einer mittleren Teilchengröße von 185 nm.
Der Neutralisationsgrad beträgt 63 %.

### Beispiel 3:

In einem Reaktionsgefäß werden 170 g (0,1 mol) eines Polyesters aus Adipinsäure, 1,6-Hexandiol und Neopentylglykol mit einem durchschnittlichen Molekulargewicht von 1.700 g/mol und 2 % OH 30 Minuten bei 120°C und 10 mbar unter Rühren entwässert. Unter Stickstoff trägt man 10,5 g (0,078 mol) Dimethylolpropionsäure und 111 g (0,5 mol) Isophorondiisocyanat ein. Nach 1 Stunde Reaktionszeit bei 110°C wird der Ansatz auf 60°C abgekühlt und in 100 g Aceton gelöst. Nach Zugabe von 19,8 g (0,22 mol) 1,4-Butandiol wird 22 Stunden bei 50°C nachgerührt. Der NCO-Gehalt beträgt 1,60 % (berechnet 2,06 %). Man verdünnt mit 600 g Aceton. Zum NCO-Prepolymer wird bei 50°C zuerst 9,5 g (0,056 mol) Isophorondiamin, in 60 g Wasser und anschließend 2,22 g (0,017 mol) Dibutylamin gegeben. Anschließend rührt man 5 Stunden bei 50°C nach. Es wird mit 7,2 g (0,063 mol) 15 %-iger Ammoniaklösung neutralisiert und mit 463 g Wasser dispergiert. Das Aceton entfernt man bis 50°C und 150 mbar und erhält so eine weiße Dispersion mit einem Feststoffgehalt von 38 % und einer mittleren Teilchengröße von 218 nm.
Der Neutralisationsgrad beträgt 81 %.

### Beispiel 4:

In einem Reaktionsgefäß werden 170 g (0,1 mol) eines Polyesters aus Adipinsäure, 1,6-Hexandiol und Neopentylglykol mit einem durchschnittlichen Molekulargewicht von 1.700 g/mol und 2 % OH 30 Minuten bei 120°C und 10 mbar unter Rühren entwässert. Unter Stickstoff trägt man 10,5 g (0,078 mol) Dimethylolpropionsäure und 111 g (0,5 mol) Isophorondiisocyanat ein. Nach 1 Stunde Reaktionszeit bei 110°C wird der Ansatz auf 60°C abgekühlt und in 100 g Aceton gelöst. Nach Zugabe von 19,8 g (0,22 mol) 1,4-Butandiol wird 22 Stunden bei 50°C nachgerührt. Der NCO-Gehalt beträgt 1,60 % (berechnet 2,06 %). Man verdünnt mit 600 g Aceton. Zum NCO-Prepolymer wird bei 50°C zuerst 2,22 g (0,017 mol) Dibutylamin danach 9,5 g (0,056 mol) Isophorondiamin, und anschließend 60 g Wasser gegeben. Anschließend rührt man 5 Stunden bei 50°C nach. Es wird mit 7,2 g (0,063 mol) 15 %-iger Ammoniaklösung neutralisiert und mit 463 g Wasser dispergiert. Das Aceton entfernt man bis 50°C und 150 mbar und erhält so eine weiße Dispersion mit einem Feststoffgehalt von 38 % und einer mittleren Teilchengröße von 208 nm.
Der Neutralisationsgrad beträgt 81 %.

### Beispiel 5:

In einem Reaktionsgefäß werden 170 g (0,1 mol) eines Polyesters aus Adipinsäure, 1,6-Hexandiol und Neopentylglykol mit einem durchschnittlichen Molekulargewicht von 1.700 g/mol und 2 % OH 30 Minuten bei 120°C und 10 mbar unter Rühren entwässert. Unter Stickstoff trägt man 10,5 g (0,078 mol) Dimethylolpropionsäure und 111 g (0,5 mol) Isophorondiisocyanat ein. Nach 1 Stunde Reaktionszeit bei 110°C wird der Ansatz auf 60°C abgekühlt und in 100 g Aceton gelöst. Nach Zugabe von 19,8 g (0,22 mol) 1,4-Butandiol wird 22 Stunden bei 50°C nachgerührt. Der NCO-Gehalt beträgt 1,60 % (berechnet 2,06 %). Man verdünnt mit 600 g Aceton. Zum NCO-Prepolymer wird bei 50°C eine Mischung aus 2,22 g (0,017 mol) Dibutylamin und 9,5 g (0,056 mol) Isophorondiamin, und schließlich 60 g Wasser gegeben. Anschließend rührt man 5 Stunden bei 50°C nach. Es wird mit 7,2 g (0,063 mol) 15 %-iger Ammoniaklösung neutralisiert und mit 463 g Wasser dispergiert. Das Aceton entfernt man bis 50°C und 150 mbar und erhält so eine weiße Dispersion die nicht lagerstabil ist. Die Teilchengröße beträgt >3000 nm.
Der Neutralisationsgrad beträgt 81 %.

### Prüfung der Wasserfestigkeit am Film

Von beiden Dispersionen wurde einen Film ohne Hilfe eines Colösers mit einem Kastenrakel (150 µm) aufgezogen und 24 Stunden in einem Wasserbad gelagert. Danach wurden die Abziehbarkeit und die Trübung des Films qualitativ beurteilt.

| | Beispiel 1 | Beispiel 2 | Beispiel 3 | Beispiel 4 | Beispiel 5 |
|---|---|---|---|---|---|
| Art des Beispiels | Vergleich | Erfindungsgemäß | Erfindungsgemäß | Erfindungsgemäß | Vergleich |
| Abziehbark eit | Gut, aber lässt sich aber einfach durch Reiben entfernen | Gut, lässt sich nicht abreiben. | Gut, lässt sich nicht abreiben. | Gut, lässt sich nicht abreiben. | Nicht applizierbar |
| Trübung | Trüb | Transparent | Transparent | Transparent | Instabil |

Das Vergleichsbeispiel 1 beschreibt eine Polyurethandispersion, die sich gut abziehen lässt, aber der Film löst sich zu einfach vom Substrat, welches unerwünscht ist, wenn z.B. das Fahrzeug bei Regen transportiert wird und durch den Fahrwind vom Fahrzeug entfernt wird.

Die erfindungsgemäßen Beispiele 2 bis 4 dagegen beschreiben ein gut abziehbarer Film, der sich wie gewünscht auch nach einer Wasserbehandlung nicht vom Substrat abreiben lässt.

Das Vergleichsbeispiel 5 beschreibt eine Polyurethandispersion, die nicht applizierbar ist.

## Patentansprüche

1. Verfahren zur Herstellung von wässrigen Dispersionen enthaltend Polyurethanharnstoffe umfassend
a) wenigstens ein NCO-Prepolymer umfassend
i) 20 bis 60 Gew.-% wenigstens eines Diisocyanates,
ii) 20 bis 80 Gew.-% wenigstens eines Makrodioles mit einem zahlenmittleren Molekulargewicht von 500 bis 10 000,
iii) 2 bis 12 Gew.-% wenigstens einer 2,2-Bis-(hydroxymethyl)-alkanmonocarbonsäure,
iv) 0 bis 15 Gew.-% wenigstens eines kurzkettigen Diols mit einem zahlenmittleren Molekulargewicht von 62 bis 499 und
v) 0 bis 10 Gew.-% wenigstens eines monofunktionellen Alkohols mit einem zahlenmittleren Molekulargewicht von 32 bis 3500;
b) 0,1 bis 15 Gew.-% wenigstens eines Diamins mit einem zahlenmittleren Molekulargewicht von 60 bis 300,
c) 0,1 bis 5 Gew.-% wenigstens eines monofunktionellen Amins und
d) 0,1 bis 10 Gew.-% wenigstens eines Neutralisationsmittels,
wobei sich die Mengen der Komponenten a), b), c) und d) zu 100 % ergänzen, **dadurch gekennzeichnet, dass** die Zugabe der gesamten Menge der Komponente c) und die Zugabe der gesamten Menge der Komponente b) nacheinander erfolgt.

2. Verfahren nach Anspruch 1, wobei die Zugabe der gesamten Menge der Komponente c) und die Zugabe der gesamten Menge der Komponente b) in einem zeitlichen Abstand von 0 bis 10 Stunden nacheinander erfolgt.

3. Verfahren nach Anspruch 1, wobei die Komponente c) ein sekundäres Amin ausgewählt aus der Gruppe bestehend aus Dimethylamin, Diethylamin, Diisopropylamin, Dibutylamin und Piperidin ist.

4. Verfahren nach Anspruch 1, wobei die Komponente b) ausgewählt wird aus der Gruppe bestehend aus Ethylendiamin, Propylendiamin, Butylendiamin, Hexamethylendiamin, Isophorondiamin, Piperazin, p-Xylylendiamin, 4,4'-Diamino-dicyclohexylmethan und 4,4`-Diamino-3,3`-dimethyldicyclohexyl-methan.

5. Wässrige Dispersionen erhältlich nach einem Verfahren gemäß den Ansprüchen 1 bis 4.

6. Beschichtungsmittel enthaltend eine wässrige Dispersion gemäß Anspruch 5 oder erhältlich nach einem Verfahren gemäß den Ansprüchen 1 bis 4.

7. Verwendung der Beschichtungsmittel gemäß Anspruch 6 als Lacke und Überzüge.

8. Verwendung der Beschichtungsmittel gemäß Anspruch 6 als Lacke und Überzüge zum Schutz von Kraftfahrzeugen, Stahl-, Aluminium- und Metallgegenständen jeglicher Art, Glas- und Kunststoffgegenständen jeglicher Art, mineralischen Untergründen, Mauerwerk oder Natursteinen, zum Korrosionsschutz von Schiffen, Brücken, Flugzeugen, Eisenbahnen, zum Schutz von Holz- und Naturstoffgegenständen.
